# EUROPEAN PATENT SPECIFICATION

(11) **EP 2 270 439 B1**
(45) Date of publication and mention of the grant of the patent: **11.04.2018**
(21) Application number: 09164572.1
(22) Date of filing: 03.07.2009
(51) Int. Cl.: G01F 1/66

(54) **Flow meter with moulded reflector unit**
Durchflussmesser mit ausgeformter Reflektoreinheit
Débitmètre avec unité de réflecteur moulé

(43) Date of publication of application: 05.01.2011
(73) Proprietor: Kamstrup A/S, 8660 Skanderborg (DK)
(72) Inventor: Laursen, Peter Schmidt, 8660 Skanderborg (DK); Sørensen, Jens Lykke, 8330 Beder (DK)
(74) Representative: Plougmann Vingtoft a/s

(56) References cited:
- EP-A1- 0 650 035
- EP-A1- 1 798 528
- WO-A1-2006/063873
- DE-C1- 10 047 383

## Description

### FIELD OF THE INVENTION

The invention relates to an ultrasound flow meter for ultrasonic measurements of fluid flow, such as ultrasound flow meters for charging consumption meters. In particular the invention provides a method of manufacturing an ultrasound flow meter with a moulded reflector unit, such as moulded in a polymeric material.

### BACKGROUND OF THE INVENTION

Normally, ultrasound flow meters suited for measuring a fluid flow in connection with charging of a consumed quantity (e. g., heat, cooling, water or gas) will have a housing, which can be metallic or polymeric, with a cavity in the form of a through-going hole for receiving a fluid flow to be measured. Connection means to other fluid flow elements are present in each of the housing ends. In the housing a number of ultrasound transducers are installed for measuring the velocity of the fluid flow. In most flow meters two ultrasound transducers are used for sending, respectively receiving, an ultrasound signal, but versions with one ultrasound transducer, as well as versions with more than two ultrasound transducers, are seen.

In some prior art ultrasound flow meters, the ultrasound signals are guided on a path which is not along a direct line between the sending and receiving ultrasound transducer, but instead travel along a piecewise linear path where the direction is altered by at least one reflection along the way. This requires at least one reflective surface which reflects the ultrasound signals upon incidence, such that a path from a sending ultrasound transducer, over reflection on one or more reflective surfaces, to the receiving ultrasound transducer is realized.

Depending on the overall design each reflector unit consists of either one or more reflector holder parts that are preassembled with the reflector part before the assembled reflector unit is inserted in the flow meter housing. Insertion of the reflector unit in the flow meter housing can be either parallel to the direction of the flow through one of the ends of the through-going holes for the fluid flow, or it can be perpendicular to the direction of the flow through dedicated holes in the housing for the reflector unit and the ultrasound transducers. The latter is often seen with metallic compact flow meter housings, whereas installation through the through-going holes for the fluid flow is normal with polymeric compact flow meter housings.

Traditionally, stainless steel is chosen for the reflector part of the reflector unit since offering the best combination of physical properties, manufactured by dye punching or its like. Sintered parts are seen too. The corrosion properties of a stainless material are obviously of relevance due to the humid environment, but also acoustic impedance of the material is of importance, since influencing on the overall reflection performance. However, a stainless steel reflector should be firmly positioned in the middle of the fluid flow with minimized influence on the flow, since too much flow disturbance would affect the measuring capabilities. Hence, an often complex shaped reflector holder geometry is used for both positioning the reflector and minimizing the flow influence, this complex shape often being represented by a moulded part made of a polymeric material.

Different prior art designs of reflector units can be seen e.g. in the following patent documents: WO 2006/063873 A1 disclosing ultrasonic converters integrated into a tube wall, EP 0 650 035 A1 disclosing reflective surfaces deposited on a tube wall, EP 1 798 528 A1 shown a measuring tube and a reflector mirror mounted inside a flow channel, and finally DE 10 47 383 showing embodiments of reflector mirror inserts.

One common problem with prior art ultrasound flow meters is that the level of complexity, and consequently high expenditures and large timeframes, involved with the manufacturing are too high. Especially, several single manufacturing steps are involved in preparing and inserting the reflector unit. Each extra manufacturing step and each extra component creates a source of malfunction in the final flow meter, and thus simplifying the manufacturing steps and the number of single components will lead to a more reliably functioning flow meter. Furthermore, fewer components and manufacturing steps will reduce manufacturing errors and will thus lead to a lower number of devices to be discarded in the final manufacturing tests.

### SUMMARY OF THE INVENTION

In view of the above, it may be seen as an object of the present invention to provide an improved ultrasound flow meter for ultrasonic measurement of a fluid flow and an improved method of manufacturing of a flow meter which has a level of complexity minor than methods of manufacturing applied in the prior art.

Accordingly, the invention provides, in a first aspect, a method of manufacturing an ultrasound flow meter, the method comprising
- forming a reflector unit as a single element comprising a reflector, such as two reflectors, arranged to reflect ultrasound signals, and a reflector holder in a single moulding process, such as an injection moulding process,
- mounting first and second ultrasound transducers in relation to the reflector unit and in relation to a measuring tube such that the reflector is arranged to reflect an ultrasound signal between the first and second ultrasound transducers.

Thus, an improved method of manufacturing an ultrasound flow meter for ultrasonic measurement of a fluid flow is provided. In particular, it may be seen as an improvement that parts involved with the reflection of ultrasound between emission and receipt of the ultrasound signals, as the reflector and reflector holder is formed in a moulding process. This serves to provide a more effective production, since fewer components in the ultrasound flow meter are needed. Hereby, the logistics involved with manufacturing is simplified and the cost and timeframes accordingly lowered. A further advantage might be increased precision, since the relative position between ultrasound transducers, measuring tube and reflectors can be controlled to a higher precision, as the reflectors are very precisely controlled relative to the reflector holders in the moulding process.

Furthermore, it might be seen as an advantage that the ultrasound flow meter according to the invention is more reliable, since fewer components and fewer assemblies imply fewer possible causes of malfunction of the ultrasound flow meter.

Still further, by moulding the reflector unit, it is possible to design the shape of the reflector unit such that it has a more aqua dynamic flow profile, especially compared to prior art reflector units made of punched and bent metal plates where the flow profile is dictated by the thickness of the metal plate. Thereby, the manufacturing process according to the invention enables design of flow meters with increased flow measurement precision.

The reflector unit might be moulded by various materials, such as polymeric materials, metallic materials, ceramics, or a composite material, such as a polymeric material with one or more additives. Preferred polymeric materials are such as polyphenylene sulfide (PPS) or polyether sulphone (PES). Preferred metallic materials are such as stainless steel. It is noted that the properties of the polymeric materials might be customized by adding certain additives prior to the moulding process, affecting the material properties such as stiffness, density or the acoustic impedance. Examples of potential additives include reinforcement materials such as glass fibres, density increasing fillers such as chalk (calcium carbonate, CaCO₃) or powdery stainless steel raising the acoustic impedance of the material.

Since in preferred embodiments, the reflector unit is formed by moulding a single material to form a monolithic reflector unit, the reflector is also formed by this material. Thus, to provide an adequate function of the flow meter, the material must provide physical properties such that, with the actual shape of the reflector, a sufficient reflection of the ultrasonic signal is provided. To obtain this, a preferred material will provide an acoustic impedance in the frequency range of the ultrasound signal which is at least a factor of 2 times the acoustic impedance of the fluid (e.g. gas or water) to be measured by the flow meter. Preferably, this factor is a higher than 2.0, such as higher than 3.0, such as higher than 4.0. E.g. a typical polymer material will have an acoustic impedance being approximately a factor of 5.0 times the acoustic impedance of water, whereas for steel and water this factor is approximately 50. It is appreciated that even by a combination of moulding material and fluid providing a factor of 2.0, thus resulting in a rather weak ultrasound reflection at the reflector surface, it is still possible to design an ultrasound measuring system which can provide high precision measurements by appropriate selection of ultrasound transducers and measurement algorithms.

The method may comprise post processing the reflector unit after being formed in the moulding process. Such post processing may include one or more of: removing burrs from the moulding process, heating the reflector unit, polishing at least a part of the reflector unit surface, adding a layer of a material different from the material used for the moulding process to at least a part of the reflector unit surface, performing a hardening or tempering process. E.g. such post processing may comprise improving the properties of the reflector surface by coating with metallic materials.

According to another particular embodiment, the single moulding process involves a plurality of moulding materials with different properties, such as the plurality of moulding materials being applied in the single moulding process so as to form at least part of the reflector by a first material, while at least part of the reflector unit is formed by a second material, such as the first and second materials forming a layered structure on at least a part of the reflector unit, such as the second material forming a hinge structure of the reflector holder while the first material forms the reflector. The reflector might, as an example, be of a first material, whereas the reflector holder may be of a second material. It may be advantageous that the first material is chosen to be a material with suitable acoustic properties with respect to ultrasound signals, whereas the reflector holder might advantageously be a second material which has mechanical properties which are optimal in terms of holding the reflector unit in place.

The reflector unit and the measuring tube may be formed as separate elements, or they may be partly or fully integrated into one single element, as will be described in the following.

In yet another particular embodiment, the moulding process comprises forming the reflector unit and at least a part of the measuring tube together in one single element, such as forming one reflector and one half of the measuring tube in one single element, such as forming two elements each comprising a reflector and a measuring tube part, wherein the measuring tube parts of the two elements are arranged for mutual engagement to form a combined reflector and measuring tube unit, such as engagement by a snap mechanism. This may be advantageous due to the subsequent assembly process inside an ultrasound flow meter housing, as each part can be inserted from each side and assembled inside the ultrasound flow meter housing. An advantage of this embodiment is that it is relatively straightforward to automate an assembly process, such as a process where the parts are assembled by robots.

In a specific embodiment, the moulding process comprises forming one single element comprising the reflector unit and the measuring tube, such as the one single element comprising a first reflector in one end of the measuring tube and a second reflector in an opposite end of the measuring tube. An advantage of this might be that integration of parts serves to provide a more effective production, since fewer components in the ultrasound flow meter are needed. Hereby, the logistics involved with manufacturing is simplified and the cost and timeframes accordingly lowered. A further advantage might be increased precision, since the relative position between the measuring tube and the two reflectors can be controlled to a very high precision, as the relative position of the reflectors are very precisely controlled in the moulding process.

In another specific embodiment, the reflector unit part and the measuring tube part of the one single element are mechanically interconnected by a hinge part which is shaped so as to allow at least a limited relative movement between the reflector unit part and the measuring tube part, such as the manufacturing comprises bending the reflector unit part into position relative to the measuring tube part after forming the one single element. This might be advantageous, since this allows the reflector units to be moulded in a first position, away from the central axis of the measuring tube, during manufacture, while the reflector units can be bend into a second position on the axis of the measuring tube during the assembly process. The first position facilitates the manufacture process, while the second position enables the reflectors to reflect ultrasound signals which are propagating along the central axis of the measurement tube. During the manufacturing process, it might be advantageous to be able to insert tools, for example elongated tools, into the measuring tube. However, this might only be possible if the reflector units are not blocking the openings of the measuring tube by being positioned on the measuring tube centre axis near the openings.

In yet another specific embodiment, the moulding process comprises forming one single element comprising the reflector unit, the measuring tube and a housing. An advantage of this might be that integration of parts serves to provide a more effective production, since fewer components in the ultrasound flow meter are needed. Hereby, the logistics involved with manufacturing is simplified and the cost and timeframes accordingly lowered. A further advantage might be increased precision, since the relative position between the reflectors and the measuring tube can be controlled to a very high precision during the moulding process. Furthermore, the housing might also include guiding means for ultrasound transducers, which would consequently lead to still higher precision since the high precision of the moulding process could be utilized to also control the position of the ultrasound transducers.

In another special embodiment, the reflector holder is arranged for mutual engagement with another part, so as to lock the reflector unit in position, such as by means of a snap mechanism serving to lock the reflector unit in position relative to the measuring tube. This might be advantageous since this enables the high precision of the moulding process to be utilized to control the relative position of the reflector unit and other parts, for example, the measuring tube and/or the ultrasound transducers.

In yet another special embodiment, the reflector unit comprises first and second reflectors formed together as a single element in the moulding process. An advantage of this might be that integration of parts serves to provide a more effective production, since fewer components in the ultrasound flow meter are needed. Hereby, the logistics involved with manufacturing is simplified and the cost and timeframes accordingly lowered. A further advantage might be increased precision, since the relative position between the two reflectors can be controlled to a very high precision, as the relative position of the reflectors are very precisely controlled in the moulding process.

The reflecting surface of the reflector can be a smooth planar surface. However, in other embodiments, the reflecting surface of the reflector is non-planar, such as a substantially convex shape, such as a substantially concave shape. A benefit from having a non-planar reflector surface might be that the ultrasound signals are reflected favourably compared to reflections of a planar surface. For example, a concave shape of the reflecting surface might serve to focus the reflected ultrasound signals onto a point on the receiving ultrasound transducer. This could increase the amplitude of the received signal, which could improve the signal to noise ratio. Other benefits might be that higher sampling rates are possible, improved accuracy is obtained and/or that less power is required in order to achieve satisfactory signals. As another example the shape of the reflecting surface is made convex, this could serve to spread the ultrasound signal which could lead to a larger measurement area. In some applications, this could be advantageous.

In another embodiment of the invention, the moulding process is an injection moulding process, such as one single injection moulding process. Advantages of using a single injection moulding process include that it is a very simple form of production, it has a high degree of precision, the reproducibility is high and hence the uniformity of the products is high, and it is a cost-effective form of production.

A particular embodiment of the invention comprises inserting the reflector unit into a housing, such as inserting the reflector unit from an end of the housing or inserting the reflector unit in another opening of the housing.

In a second aspect, the invention provides an ultrasound flow meter manufactured according to the first aspect.

In a third aspect, the invention provides a consumption meter according to the second aspect, wherein the consumption meter is one of: a heating meter, a cooling meter, a water meter, or a gas meter

It is appreciated that advantages described for the first aspect applies as well for the second and third aspects. Further, embodiments of the first aspects may in any way be combined with the second and third aspect.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figs. 1A-1C illustrate different view of a prior art ultrasound flow meter with reflector units mounted form holes perpendicular to the flow direction,
Figs. 2A-2C illustrate different views of a monolithically moulded reflector unit embodiment suited for the flow meter shown in Fig. 1,
Figs. 3A-3B illustrate a prior art ultrasound flow meter with a measuring tube with reflector units in single elements but made of a punched metal plate which is bent into shape,
Figs. 4A-4D illustrate different views of an embodiment for use with the flow meter of Fig. 3, wherein two reflector units in hinged connection with a measuring tube are moulded as one single element,
Figs. 5A-6B illustrate different views of moulded reflector unit embodiments which can replace the prior art one seen in Fig. 3,
Figs. 6A-6C illustrate different views of yet another reflector unit embodiment suited for use with the prior art flow meter of Fig. 3, where the reflector unit is integrated with a part of the measuring tube,
Figs. 7A-7C illustrate different views of a prior art ultrasound flow meter with a measuring tube inserted in a housing, wherein the measuring tube has reflectors inserted from outside through holes in the measuring tube,
Figs. 8A-8C illustrate different views of a moulded measuring tube with integrated reflector units suited for replacing the measuring tube shown in Fig. 7, and
Figs. 9A-9C illustrate different views of an embodiment wherein flow meter housing, measuring tube and reflectors are moulded in one single element.

### DESCRIPTION OF EMBODIMENTS

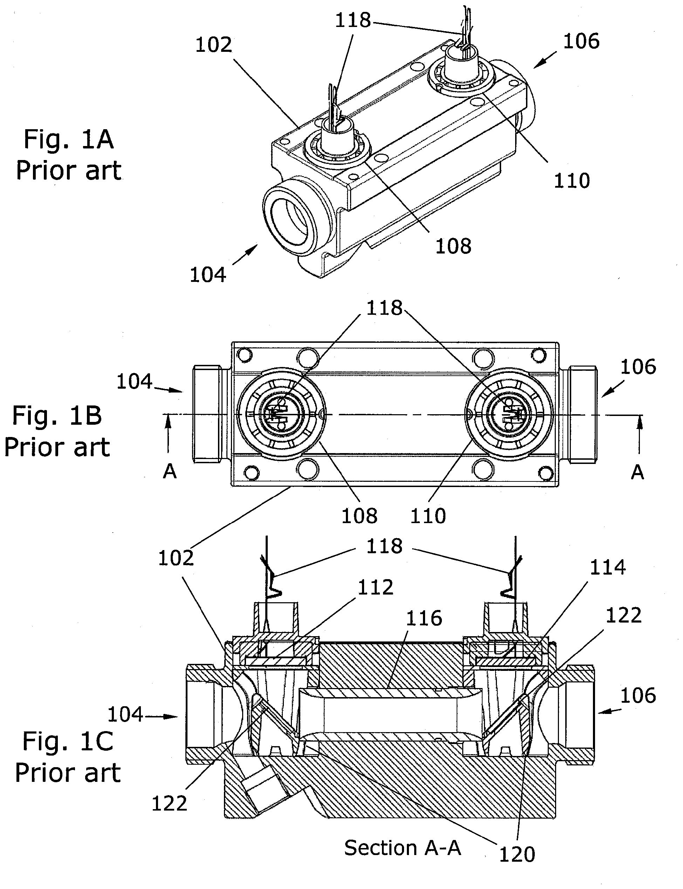

Figs. 1A-1C show different views of a prior art ultrasound flow meter with reflector units 120 in place inside the housing 102. Fig. 1A shows a perspective view, Fig. 1B shows a top view, and Fig. 1C shows the section A-A defined in Fig. 1B. The housing 102 has a first opening 104 and a second opening 106 for passage of gas or liquid which is then guided through a measuring tube 116. Openings 108, 110 perpendicular to the measuring tube for respective ultrasound transducers 112, 114 electrically connected to an electronic unit (not shown) via electrodes 118. The ultrasound transducers 112, 114 are arranged for transmitting ultrasonic signals through the measuring tube 116 via reflections on the surfaces of metallic reflectors 122 on the reflector units 120. The reflector units 120 shown in Figs. 1A-1C are formed by a polymeric reflector holder onto which the metallic reflectors 122 are attached, and thus one reflector unit 120 is formed by two elements of different materials, and each element is manufactured in separate processes prior to being assembled.

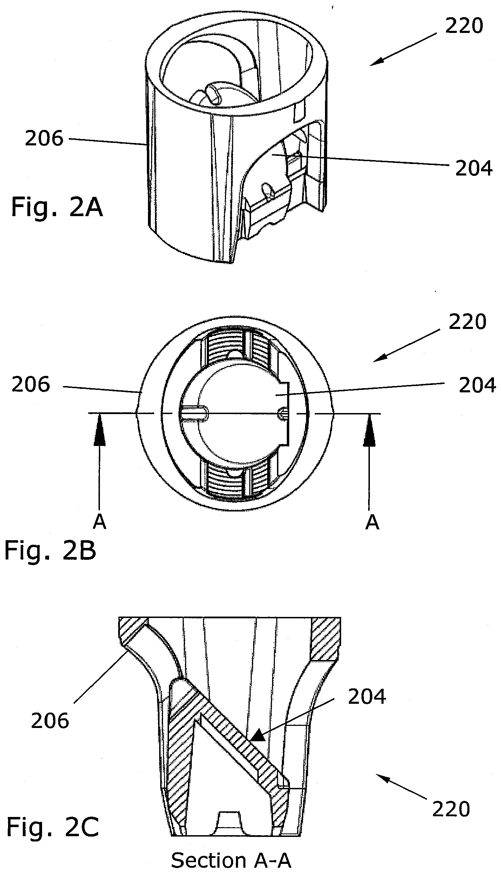

Figs. 2A-2C show different views of a reflector unit 220 according to the invention, namely a reflector unit which has the same shape as the prior art reflector units 120 shown in Figs. 1A-1C. Thus, the reflector unit 220 can be used to replace the one 120 shown in the flow meter in Figs. 1A-1C. Fig. 2A shows a perspective view, and Fig. 2B shows a top view which might also in some embodiments be the view from an ultrasound transducer situated above the reflector unit in the assembled ultrasound flow meter. Fig. 2C shows the section A-A defined in Fig. 2B. The reflector unit 220 is preferably injection moulded in one single process to form a monolithic unit comprising a reflector 204 arranged to reflect ultrasound signals, and a reflector holder 206. The reflector unit 220 is preferably formed by a polymer such as PPS or PES, however it may also be formed by a metal or a ceramics.

As seen, the separate metal reflector 122 from the reflector unit 120 shown in Figs. 1A-1C has been replaced by a reflector 204 which is formed monolithically integral with the reflector holder 206. The moulding process provides a freedom to design the shape of the surface of the reflector 204 to be either plane or non-planar, and further it is possible to freely design the integration of the reflector 204 with the holder 206 such that undesired influence of the flow in the measuring tube due to the presence of the reflector unit 220 can be reduced, thereby improving measuring accuracy of the flow meter. Still, compared to the prior art reflector holder 120, the reflector holder 220 has the advantage that it is formed in a single process meaning that functional errors, such as the metal reflector 122 falling of or becomes misplaced, are eliminated.

The reflector unit 220 may alternatively be formed in a moulding process involving a plurality of moulding materials with different properties. In some embodiments, the reflector 204 may be of one material, whereas the reflector holder 206 may be of another material. It may, for example, be advantageous that the reflector 204 material chosen to be a material with acoustic properties which give a high reflection coefficient with respect to ultrasound signals, whereas the reflector holder 206 might advantageously be another material which has mechanical properties which are optimal in terms of holding the reflector unit in place.

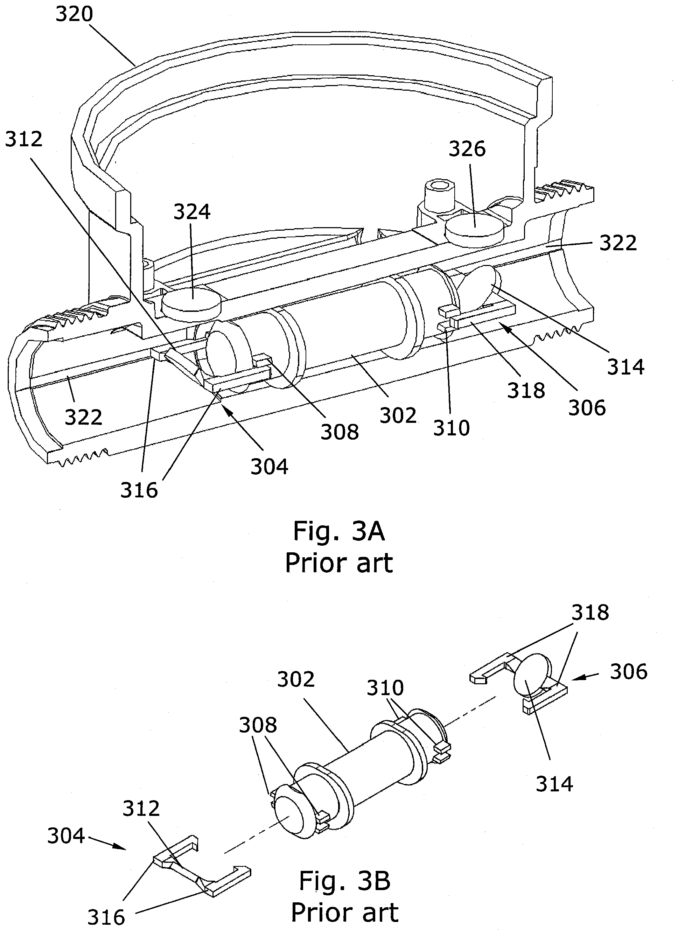

Figs. 3A and 3B show a prior art ultrasound flow meter, e.g. a flow meter forming part of a water meter. Fig. 3A shows a cut-away view of the flow meter housing 320 with the measuring tube 302 and reflector units 304, 306 mounted. Fig. 3B shows the measuring tube 302 and reflector units 304, 306 prior to assembly.

When mounted, reflector units 304, 306 are locked in position to the measuring tube 302, by means of reflector holders 316, 318 in the form of arms locked to respective locking mechanisms 308, 310 on the measuring tube 302. The housing 320 has guiding means 322 in the form of recesses which serve to facilitate the mounting of the measuring tube element via engagement with reflector holders 316, 318 of the reflector units 304, 306.

The reflector units 304, 306 are formed by punching a metal plate into shape, followed by bending the reflector parts 312, 314 to provide the desired reflection angle. Thus, due to the forming of such reflector units 304, 306 from a metal plate, they can not be shaped to provide an optimal flow, since with such method it is not possible to vary the thickness of the unit 304, 306 to form a better flow behaviour.

In the flow meter of Fig. 3, ultrasound transducers 324, 326 are mounted on surfaces outside the housing 320 which is formed by a polymeric material, thereby enabling ultrasound signals from the transducers 324, 326 to penetrate through the housing 320. When mounted, the relative positions of the ultrasound transducers 324, 326 and the reflectors 312, 314 are such that an ultrasound signal emitted from one ultrasound 324 transducer can be reflected from a reflector 312 in a direction of the other reflector 314, i.e. through the measuring tube 302, then be incident on the other reflector 314 and finally reflected onto the other ultrasound transducer 326.

A method of assembling the prior art flow meter of Fig. 3 is to first attach a first reflector unit 304 onto the measuring tube 302, then slide the measuring tube 302 with reflector unit 304 into the housing 320 in a direction along the length axis of the measurement tube 302 while the first reflector unit holder 316 engages with the housing guiding means 322. Then the second reflector 306 unit can be mounted by sliding it into the housing 320 in an opposite direction, while the second reflector unit holder 318 engages with the housing guiding means 322. The second reflector unit 314 is moved along the housing guiding means 322 until the reflector holder 318 of the second reflector unit 314 can be mounted onto the locking mechanism 310 of measurement tube 302 already present in the housing 320.

Thus, in the prior art flow meter of Fig. 3, reflectors and measuring tube are formed by three separate elements 302, 304, 306, and several steps are required in the manufacturing and the assembling of the elements with the housing 320.

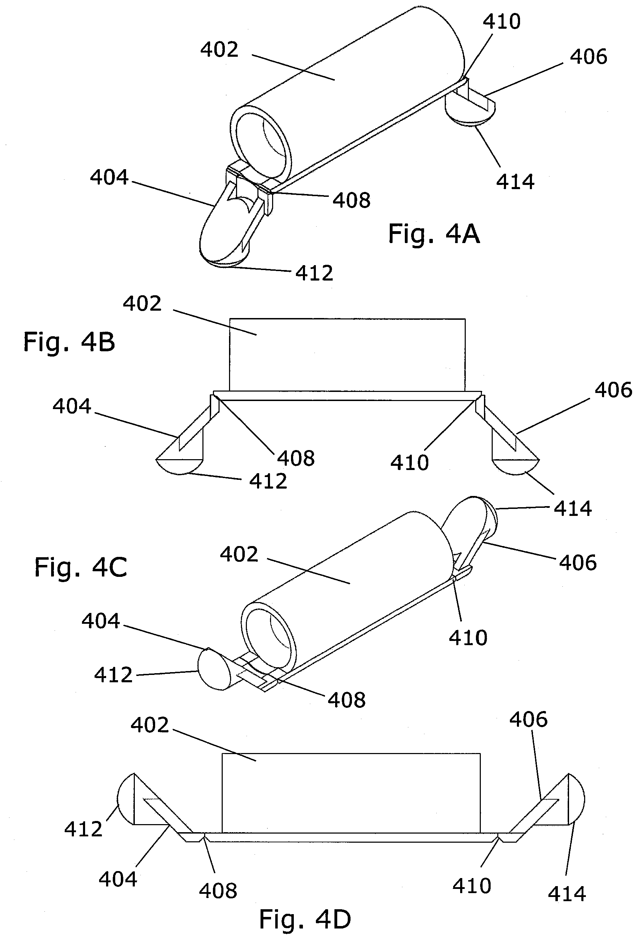

Figs. 4A-4D show different views and states of an embodiment of the invention in the form of a measuring tube element including a measuring tube with integrated reflector units and moulded in one single moulding process. The measuring tube element is suited to replace the elements 302, 304, 306 of the prior art flow meter of Fig. 3 and thereby replace three elements with one single moulded element.

In Figs. 4A and 4B a perspective- and a side view of a measuring tube with integrated reflector units are shown as it could be moulded, however, with the reflector units 404, 406 in a position which is not ready for mounting into a flow meter housing. Figs. 4C and 4D show a perspective- and a side view of a measuring tube with integrated reflector units with the reflector units 404, 406 in a position which is ready for mounting into a flow meter housing.

The measuring tube element includes a measuring tube 402, a first reflector unit 404 placed in one end of the measuring tube 402 and a second reflector unit 406 placed in the opposite end of the measuring 402. As seen, the first and second reflector units 404, 406 are integrally formed with the measuring tube 402 through respective first and second hinges 408, 410. The hinges 408, 410 serve to provide the possibility that the reflector units 404, 406 can change angular position relative to the measuring tube 402. Hereby it becomes possible to mould the integrated measuring tube element in one single element, e.g. monolithically, since it is not possible to mould the element as shown in Figs. 4C and 4D as a single element. However, due to the hinges 408, 410 it is possible to change between the configuration suitable for moulding (Figs. 4A and 4B), and the final configuration ready for mounting in a flow meter housing (Figs. 4C and 4D). Preferably, the measuring tube element is moulded in a polymeric material, e.g. in two polymeric materials to ensure that a suitably flexible polymer is used for the hinges 408, 410, while a more durable polymer can be used for the rest of the element.

In the shown embodiment, the reflector units 404, 406 are equipped with respective first and second flow controlling parts 412, 414 integrally formed with the reflector and reflector holders of these units 404, 406. These flow controlling parts 412, 414 serve to influence the flow of fluid, i.e. gas or liquid, inside the measuring tube 402. If fluid inside the measurement tube 402 is controlled, the ultrasound flow meter might yield more precise flow measurements. A further advantage of controlling the fluid inside the measuring tube 402 is that the pressure drop over the ultrasound flow meter is reduced compared with the pressure drop resulting from the not optimally shaped reflector units 304, 306 of Fig. 3.

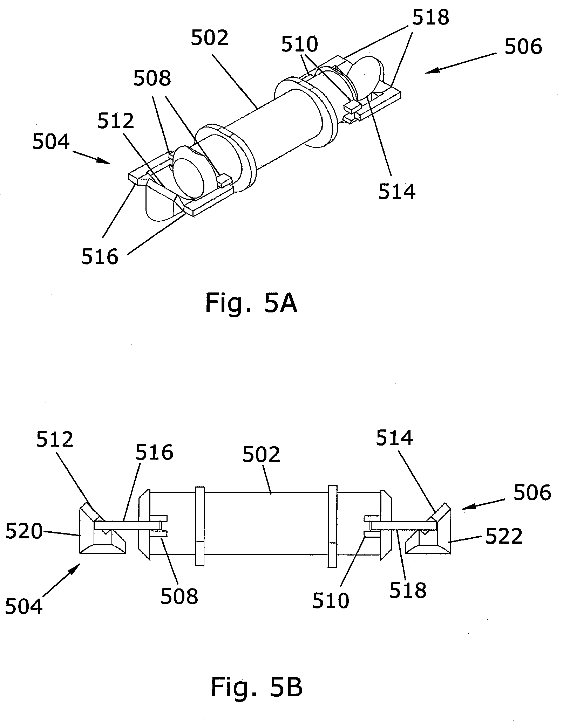

Figs. 5A and 5B show different view of another embodiment of the invention which can be used to replace the reflector units 304, 306 in the flow meter of Fig. 3. In contrast to the prior art reflector units 304, 306 of Fig. 3, the reflector units 504, 506 including reflectors 512, 514 and reflector holders 516, 518 are monolithic elements moulded in a single moulding process, preferably injection moulding. The reflector units 504, 506 may be formed by a polymer material such as PPS or PES, or formed by a metal material such as stainless steel. The basic function of the reflector holders or arms 516, 518 is similar to that described in connection with Fig. 3, i.e. they serve to lock the reflector units 504, 506 into position by engagement with lock mechanisms 508, 510 on the measuring tube 502, and the holders 516, 518 further serve to engage with recesses 322 in the flow meter housing 302.

As also described in connection with Fig. 4, the reflector units 504, 506 have flow controlling parts 520, 522, especially visible in Fig. 5B, serving to reduce flow disturbance. Optimal shaping of these parts 520, 522 is possible due to the moulding process, thereby resulting in reduced pressure drop and improved measurement accuracy. Still, from a manufacturing point of view, this can be achieved with reflector units 504, 506 which can be easily produced in a moulding process suited for automated mass production without the need for more single manufacturing steps as is the case with prior art reflector units such as 304, 306.

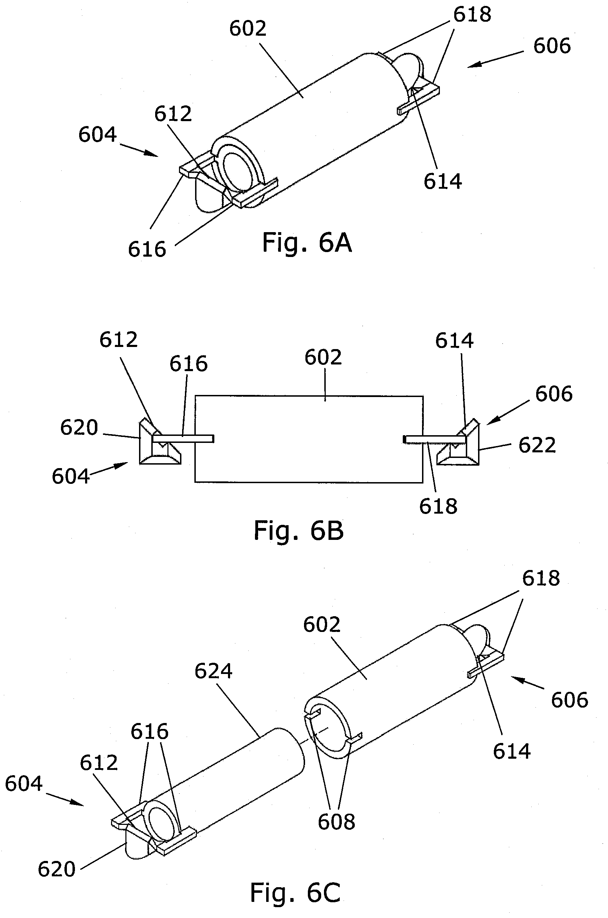

Figs. 6A-6C show different views of another measurement tube element embodiment which can be used to replace the prior art one shown in Fig. 3B. In the embodiment of Figs. 6A-6C, reflector unit 604 is moulded integral with part of the measuring tube 624, and reflector unit 606 is moulded integral with another part of the measuring tube 602, where the measuring tube comprises two concentric tubes 624, 602, where one of the tubes 624 is inserted in the other one 602 during assembly. Thus, in this embodiment the measuring tube element with reflector units ready for inserting in the flow meter housing has been reduced to two single elements instead of three single elements in the prior art version of Fig. 3B. Figs. 6A and 6B show views of the embodiment in an assembled state, while Fig. 6C shows the two reflector unit parts 604, 606 with their respective measuring tube parts 624, 602 prior to insertion in one another.

Each reflector unit 604, 606 forms a monolithic element with respective measuring tube part 624, 602, where one measuring tube part 624 of smaller diameter is inserted into the measuring tube part 602 of larger diameter. The measuring tube parts 624, 602 are arranged such that the outer diameter of the measuring tube part 624 with the smallest outer diameter approximately matches an inner diameter of the measuring tube part 602 with largest outer diameter, taking into account a proper clearance. This enables the assembly of the measuring tube parts 624, 602 by inserting the measuring tube part 624 into the measuring tube part 602. Relative movement of the parts 624, 602 along a centre axis is restricted by the guiding means 608 which engages with the reflector holders 616 upon insertion. When the guiding means 608 engages with the reflector holders 616, a rotation movement of the measuring tube part 624 around a centre axis in the length direction is also restricted. An advantage of this coupling of the measuring tube parts 602, 624 is that the reflectors 612, 614, which are coupled to the measurement tube parts 602, 624 through the reflector holders 616, 618 have their position relative to each other controlled in a very precise manner. Still, the inner part of the measuring tube 624 where the fluid flows is left without any sharp edges, and it is possible to mould the two parts, i.e. the part with 604, 624 and the part with 606, 602, separately.

As previously described, the embodiment of Figs. 6A-6C can be moulded by materials such as polymer, metal or ceramics. As also described previously, the embodiment of Figs. 6A-6C has flow correction parts 620, 622 to improve flow performance of the measuring tube and reflector arrangement, thus resulting in reduced pressure drop and more precise measurements.

It is appreciated that other ways of monolithically integrating one reflector holder with at least a part of the measuring tube can be designed, i.e. variations of the embodiment of Figs. 6A-6C. E.g. the length of the measuring tube can be split into two parts each monolithically integrated with a respective. The two parts can even be similar, which further reduces the production cost as only one moulding tool would be required.

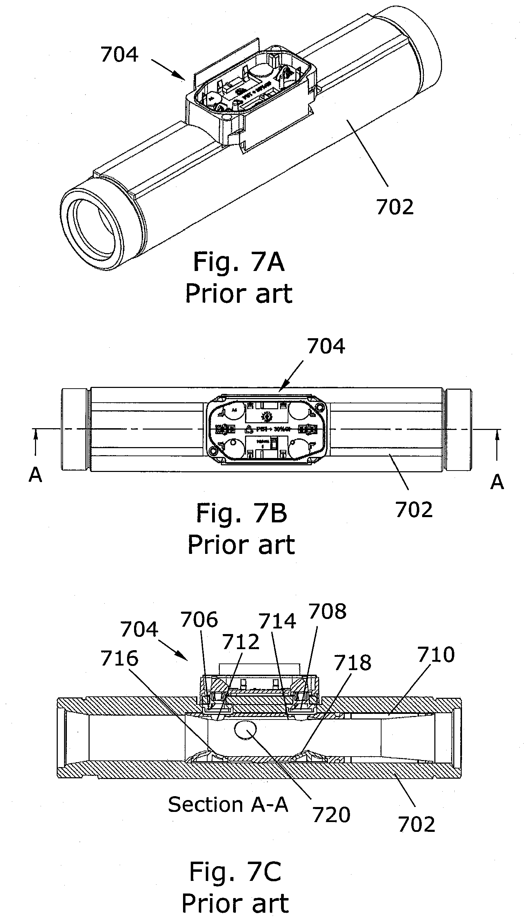

Figs. 7A-7C illustrate different views of a prior art ultrasound flow meter with a housing 702 and a measurement circuit part 704 attached thereto. In the section view of Fig. 7C it is seen that a measurement tube 710, e.g. made of a polymer or metal, is inserted into the housing 702. The measurement tube 710 has holes 712, 714 suited for mounting of ultrasound transducers 706, 708. Three reflectors 716, 718, 720, e.g. in the form of sintered metal reflectors, are inserted in separate manufacturing steps from outside via holes in the measuring tube 710, and thus part of the measuring tube 710 serves as reflector holder. Only three reflectors 716, 718, 720 are visible, however altogether four sintered metal reflectors are mounted in the measuring tube 710, and thus five elements are assembled to form the measuring tube and reflector element to be inserted into the housing 702.

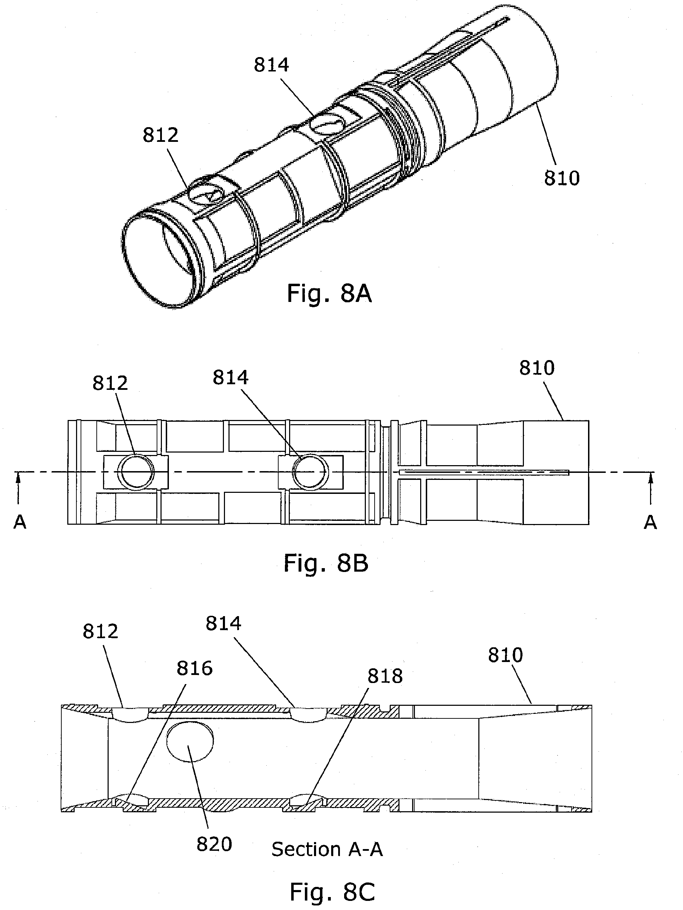

Figs. 8A-8C illustrate different views of an embodiment of the invention suited for replacing the measurement tube 710 and reflectors 716, 718, 720 in the prior art flow meter of Fig. 7. One monolithically moulded element includes measurement tube 810 with transducer holes 812, 814, and four ultrasound reflectors of which three 816, 818, 820 are visible. Thus, the five single elements of prior art requiring mounting of the separate reflector elements in the measuring tube is eliminated since all five elements are integrated in one single element formed in one single moulding process. As described, materials such as polymer, metal and ceramics can be used as moulding elements also for this embodiment.

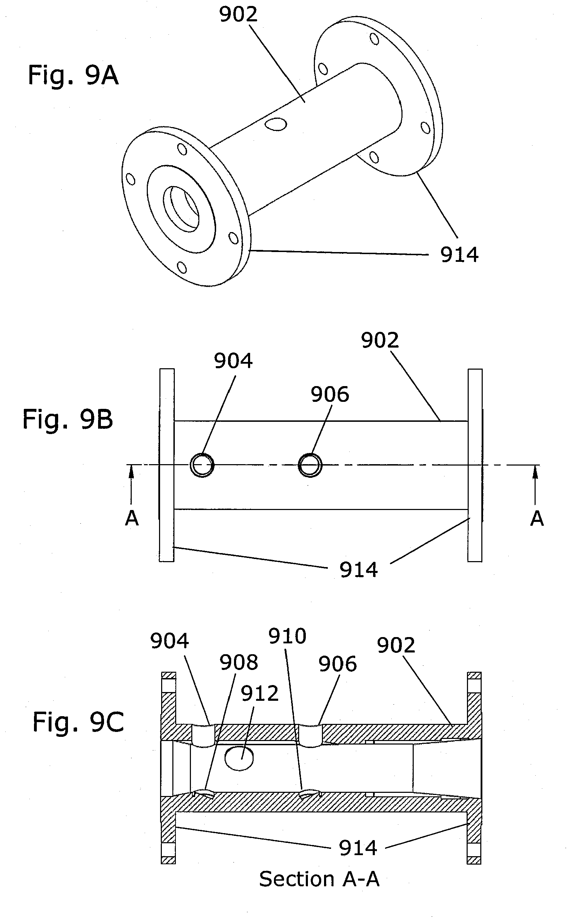

Figs. 9A-9C illustrate different views of another embodiment which provides a very high degree of elimination of single components and single steps of assembly in the process of manufacturing an ultrasound flow meter. One single monolithic element formed in one single moulding process includes an integrated housing 902 with flanges 914 for mounting onto adjacent pipelines. The housing 902 also serves as measuring tube, and it is formed with holes 904, 906 for ultrasound transducers. Reflectors 908, 910, 912 are formed on the inside of the combined housing 902 and measuring tube in a manner similar to the embodiment of Fig. 8. With respect to moulding materials, as mentioned, polymer, metal and ceramics are preferred.

Compared to the prior art flow meter of Fig. 7, the embodiment of Fig. 9 has a significantly lower amount of single components, and is thus simple to manufacture, since in one single moulding process all functional elements are combined to one single element. Hereby all intermediate assembly steps are eliminated, and thus this embodiment is highly suited for automated mass production.

To sum up, the invention provides a method for manufacturing an ultrasound flow meter, the method comprises forming a reflector unit 604, 606 as a single element comprising a reflector 612, 614 and a reflector holder 616, 618 in a moulding process, such as an injection moulding process using polymer. The reflectors are arranged to reflect ultrasound signals. The method further comprises mounting first and second ultrasound transducers in relation to the reflector unit 604, 606 and in relation to a measuring tube 602, 624 such that the one or more reflectors 612, 614 are arranged to reflect an ultrasound signal between the first and second ultrasound transducers. In a specific embodiment of the invention, the reflector units 604, 606 are integrated with the measuring tube or parts thereof 602, 624, the integration of parts simplifies the production and enhances performance of the finished ultrasound flow meter.

Although the present invention has been described in connection with preferred embodiments, it is not intended to be limited to the specific form set forth herein. Rather, the scope of the present invention is limited only by the accompanying claims.

## Claims

1. An ultrasound flow meter comprising:
- a housing,
- a measuring tube,
- a reflector unit comprising a reflector arranged to reflect ultrasonic signals, and a reflector holder inserted into the housing from an opening in the housing, and
- first and second ultrasound transducers, mounted in relation to the reflector unit and in relation to the measuring tube such that the reflector is arranged to reflect an ultrasound signal between the first and second ultrasound transducers,
**characterized in that** the reflector unit is formed in a single moulding process as a single monolithic polymer element.

2. Flow meter according to claim 1, wherein the reflector unit is formed by a moulded single material to form a monolithic reflector unit.

3. Flow meter according to claim 1, wherein the reflector unit is formed by a plurality of materials with different properties moulded in a single moulding process.

4. Flow meter according to claim 3, wherein the plurality of materials comprises first and second materials forming a layered structure on at least a part of the reflector units.

5. Flow meter according to claim 3, wherein the plurality of materials comprises first and second materials, where the second material forms a hinge structure of the reflector holder while the first material forms the reflector.

6. Flow meter according to any of the preceding claims, wherein the reflector unit is formed together in one single element with at least a part of the measuring tube.

7. Flow meter according to claim 6 wherein one reflector unit and one part of the measuring tube is formed as a single element arranged for mutual engagement with another reflector unit and another part of the measuring tube to form a combined reflector and measuring tube unit.

8. Flow meter according to claim 6, wherein the reflector units and the measuring tube are formed as one single element comprising a first reflector unit in one end of the measuring tube and a second reflector unit in the opposite end of the measuring tube.

9. Flow meter according to claim 8, wherein the reflector unit part and the measuring tube part of the one single element are mechanically interconnected by a hinge part which is shaped so as to allow at least a limited relative movement between the reflector unit part and the measuring tube part.

10. Flow meter according to claim 1, wherein the reflector holder is arranged for mutual engagement with the measuring tube, so as to lock the reflector unit in position by means of a snap mechanism serving to lock the reflector unit in position relative to the measuring tube.

11. Flow meter according to any of the preceding claims, wherein a reflecting surface of the reflector has a non-planar surface being either substantially convex or substantially concave.

12. Flow meter according to claim 1, wherein the reflector unit is formed in a polymeric material with one or more additives.

13. Flow meter according to claim 12, wherein the additives raise the acoustic impedance of the material.

14. Flow meter according to claim 12 or 13, wherein the additive selected from glass fibres, a density increasing fillers, calcium carbonate or powdery stainless steel.

15. Flow meter according to any of the preceding claims being one of: a heating meter, a cooling meter, a water meter, or a gas meter.

## Patentansprüche

1. Ultraschalldurchflussmesser, umfassend:
- ein Gehäuse,
- ein Messrohr,
- eine Reflektoreinheit, umfassend einen Reflektor, der dazu angeordnet ist, Ultraschallsignale zu reflektieren, und einen Reflektorhalter, der von einer Öffnung in dem Gehäuse in das Gehäuse eingesetzt ist, und
- einen ersten und zweiten Ultraschallwandler, die so in Bezug auf die Reflektoreinheit und in Bezug auf das Messrohr befestigt sind, dass der Reflektor dazu angeordnet ist, ein Ultraschallsignal zwischen dem ersten und dem zweiten Ultraschallwandler zu reflektieren,
**dadurch gekennzeichnet, dass** die Reflektoreinheit in einem einzelnen Ausformungsprozess als ein einzelnes monolithisches Polymerelement gebildet ist.

2. Durchflussmesser nach Anspruch 1, wobei die Reflektoreinheit durch ein ausgeformtes einzelnes Material gebildet ist, um eine monolithische Reflektoreinheit zu bilden.

3. Durchflussmesser nach Anspruch 1, wobei die Reflektoreinheit durch eine Vielzahl von Materialien mit unterschiedlichen Eigenschaften, die in einem einzelnen Ausformungsprozess ausgeformt sind, gebildet ist.

4. Durchflussmesser nach Anspruch 3, wobei die Vielzahl von Materialien erstes und zweites Material umfasst, die eine geschichtete Struktur an zumindest einem Teil der Reflektoreinheiten bilden.

5. Durchflussmesser nach Anspruch 3, wobei die Vielzahl von Materialien erstes und zweites Material umfasst, wobei das zweite Material eine Scharnierstruktur des Reflektorhalters bildet, während das erste Material den Reflektor bildet.

6. Durchflussmesser nach einem der vorstehenden Ansprüche, wobei die Reflektoreinheit in einem einzelnen Element zusammen mit zumindest einem Teil des Messrohrs gebildet ist.

7. Durchflussmesser nach Anspruch 6, wobei eine Reflektoreinheit und ein Teil des Messrohrs als ein einzelnes Element gebildet sind, das zum gegenseitigen Eingreifen mit einer anderen Reflektoreinheit und einem anderen Teil des Messrohrs angeordnet ist, um eine kombinierte Reflektor- und Messrohreinheit zu bilden.

8. Durchflussmesser nach Anspruch 6, wobei die Reflektoreinheiten und das Messrohr als ein einzelnes Element umfassend eine erste Reflektoreinheit an einem Ende des Messrohrs und eine zweite Reflektoreinheit an dem gegenüberliegenden Ende des Messrohrs gebildet sind.

9. Durchflussmesser nach Anspruch 8, wobei der Reflektoreinheitteil und der Messrohrteil des einzelnen Elements mechanisch miteinander durch ein Scharnierteil verbunden sind, das so geformt ist, dass es zumindest eine relative Bewegung zwischen dem Reflektoreinheitteil und dem Messrohrteil ermöglicht.

10. Durchflussmesser nach Anspruch 1, wobei der Reflektorhalter zum gegenseitigen Eingreifen mit dem Messrohr angeordnet ist, um so die Reflektoreinheit mittels eines Schnappmechanismus zu verriegeln, der dazu dient, die Reflektoreinheit in Position relativ zu dem Messrohr zu verriegeln.

11. Durchflussmesser nach einem der vorstehenden Ansprüche, wobei eine reflektierende Oberfläche des Reflektors eine nicht ebene Oberfläche aufweist, die entweder im Wesentlichen konvex oder im Wesentlichen konkav ist.

12. Durchflussmesser nach Anspruch 1, wobei die Reflektoreinheit in einem polymerischen Material mit einem oder mehreren Zusatzstoffen gebildet ist.

13. Durchflussmesser nach Anspruch 12, wobei die Zusatzstoffe die akustische Impedanz des Materials erhöhen.

14. Durchflussmesser nach Anspruch 12 oder 13, wobei der Zusatzstoff aus Glasfasern, die Dichte erhöhenden Füllstoffen, Calciumcarbonat oder Edelstahlpulver ausgewählt ist.

15. Durchflussmesser nach einem der vorstehenden Ansprüche, wobei dieser einer der Folgenden ist: ein Wärmemesser, ein Kühlmesser, ein Wassermesser oder ein Gasmesser.

## Revendications

1. Débitmètre à ultrasons comprenant :
- un boîtier,
- un tube de mesure,
- une unité de réflecteur comprenant un réflecteur agencé pour refléter des signaux à ultrasons, et un porte-réflecteur inséré dans le boîtier depuis une ouverture dans le boîtier, et
- des premier et deuxième transducteurs à ultrasons, montés en relation avec l'unité de réflecteur et en relation avec le tube de mesure de manière à ce que le réflecteur soit agencé pour réfléchir un signal à ultrasons entre le premier et le deuxième transducteurs à ultrasons,
**caractérisé en ce que** l'unité de réflecteur est formée dans un processus de moulage unique sous la forme d'un élément polymère monobloc unique.

2. Débitmètre selon la revendication 1, dans lequel l'unité de réflecteur est formée par un matériau unique moulé pour former une unité de réflecteur monobloc.

3. Débitmètre selon la revendication 1, dans lequel l'unité de réflecteur est formée par une pluralité de matériaux avec des propriétés différentes moulés dans un processus de moulage unique.

4. Débitmètre selon la revendication 3, dans lequel la pluralité de matériaux comprend des premier et deuxième matériaux formant une structure en couches sur au moins une partie des unités de réflecteurs.

5. Débitmètre selon la revendication 3, dans lequel la pluralité de matériaux comprend des premier et deuxième matériaux, où le deuxième matériau forme une structure à charnière du porte-réflecteur tandis que le premier matériau forme le réflecteur.

6. Débitmètre selon l'une quelconque des revendications précédentes, dans lequel l'unité de réflecteur est formée conjointement dans un même élément à au moins une partie du tube de mesure.

7. Débitmètre selon la revendication 6, dans lequel une unité de réflecteur et une partie du tube de mesure sont formés comme un même élément agencé pour un engagement mutuel avec une autre unité de réflecteur et une autre partie du tube de mesure pour former une unité combinée de réflecteur et tube de mesure.

8. Débitmètre selon la revendication 6, dans lequel les unités de réflecteurs et le tube de mesure sont formés comme un élément unique comprenant une première unité de réflecteur dans une extrémité du tube de mesure et une deuxième unité de réflecteur dans l'extrémité opposée du tube de mesure.

9. Débitmètre selon la revendication 8, dans lequel la partie d'unité de réflecteur et la partie de tube de mesure du même élément unique sont interconnectés mécaniquement par une partie de charnière qui est profilée de sorte de permettre au moins un déplacement relatif limité entre la partie d'unité de réflecteur et la partie de tube de mesure.

10. Débitmètre selon la revendication 1, dans lequel le porte-réflecteur est agencé pour un engagement mutuel avec le tube de mesure, de manière à verrouiller l'unité de réflecteur en position, au moyen d'un mécanisme à enclenchement servant à verrouiller l'unité de réflecteur en position par rapport au tube de mesure.

11. Débitmètre selon l'une quelconque des revendications précédentes, dans lequel une surface réfléchissante du réflecteur a une surface non planaire étant soit sensiblement convexe soit sensiblement concave.

12. Débitmètre selon la revendication 1, dans lequel l'unité de réflecteur est formée dans un matériau polymère avec un ou plusieurs additifs.

13. Débitmètre selon la revendication 12, dans lequel les additifs rehaussent l'impédance acoustique du matériau.

14. Débitmètre selon la revendication 12 ou 13, dans lequel l'additif est sélectionné parmi des fibres de verre, des agents d'augmentation de la densité, du carbonate de calcium ou de l'acier inoxydable en poudre.

15. Débitmètre selon l'une quelconque des revendications précédentes, étant l'un parmi un compteur de chauffage, un compteur de climatisation, un compteur d'eau ou un compteur de gaz.
